# EUROPEAN PATENT SPECIFICATION

(11) **EP 2 860 097 B1**
(45) Date of publication and mention of the grant of the patent: **31.08.2016**
(21) Application number: 13187932.2
(22) Date of filing: 09.10.2013
(51) Int. Cl.: B62M 17/00

(54) **Crank assembly of a shaft driven bicycle**
Kurbelanordnung einer Fahrrads mit Wellenantrieb
Ensemble de manivelle de bicyclette entraînée par un arbre

(43) Date of publication of application: 15.04.2015
(73) Proprietor: NEW KAILUNG GEAR CO., LTD., Kaohsiung (TW)
(72) Inventor: Liu, Jen-Chih, Kaohsiung (CN)
(74) Representative: Treeby, Philip David William

(56) References cited:
- WO-A1-01/69342
- CN-U- 2 098 457
- CN-U- 2 106 128
- CN-U- 201 890 339
- CN-Y- 2 140 344
- DE-A1- 3 842 113
- DE-U1- 9 104 351
- JP-A- H07 137 680
- US-A- 5 251 504

## Description

### FIELD OF THE INVENTION

The present invention relates to crank of a shaft driven bicycle, and particular to a crank assembly having a main transmission gear to be engaged by a passive gear of a passive shaft. The main transmission gear has teeth facing opposite to the crank.

### DESCRIPTION OF THE PRIOR ART

Prior transmission mechanism of a bicycle is done by chain connecting to two gears for transmitting power. However chains could cause inconvenient and dangerous situations such as being jammed by cyclist's pants, or fall due to the jam of chain.

Therefore, a shaft driven bicycle is presented to get rid of the chain mechanism. The chain driven mechanism and the shaft driven mechanism is not compatible to each other, both mechanisms need its own frame design to support the mechanism. Known shaft driven mechanisms are designed using a main transmission gear fixed to the axis of the bicycle frame, and the main transmission gear is driven by crank arms pivoted to the axis so that the main transmission gear is rotated with the axis. For the main transmission gear is arranged to the axis of frame, the arrangement of transmission mechanism and overall balance is limited. Moreover, the manufacture cost and assembly for such main transmission gear is higher and complex so that an improvement for the practicability and economic benefit of the product is urgently needed. CN-y-2140344 discloses a crank assembly having the features of the preamble of claim 1.

### SUMMARY OF THE PRESENT INVENTION

Accordingly, the primary object of the present invention is to provide a crank assembly for a shaft driven bicycle to avoid a limitation of space or designed balance of the bicycle and to efficiently lower the manufacture and assembly cost of the main transmission gear. The main transmission gear driven directly by the crank also provides higher power transmission efficiency so as to improve the practicability and economic benefit of the product.

To achieve above object, the crank assembly of a shaft driven bicycle includes at least one main transmission gear on one crank arm pivoted to the axis of a bicycle frame. The main transmission gear is engaged with a passive gear of a passive shaft. Teeth of the main transmission gear face opposite to the crank arm. Therefore, the crank assembly won't interfere with the axis of the bicycle, and the main transmission gear is driven directly by the crank arms for better power transmission efficiency.

### BEIRF DESCRIPTION OF THE DRAWINGS

Fig. 1 is a cross-section view showing the first embodiment of a main transmission gear of the present invention.
Fig. 2 is a cross-section view showing the second embodiment of the main transmission gear of the present invention.
Fig. 3 is a cross-section view showing the assembly of the first embodiment of present invention.
Fig. 4 is a cross-section view showing the assembly of the second embodiment of present invention
Fig. 5 is a cross-section view showing the assembly of the present invention to a main frame of a bicycle.
Fig. 6 is an enlarged view showing a crank assembly in Fig. 5.

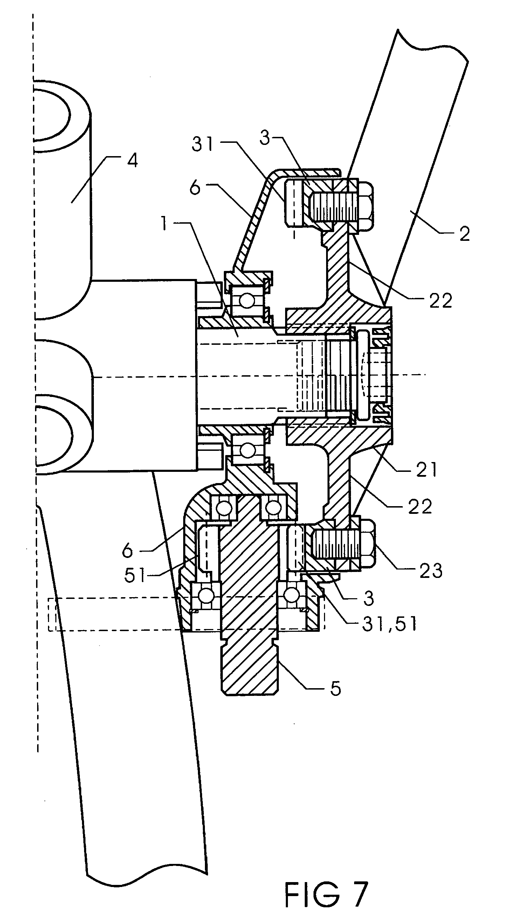

Fig. 7 is a cross-section view showing a sheath not claimed

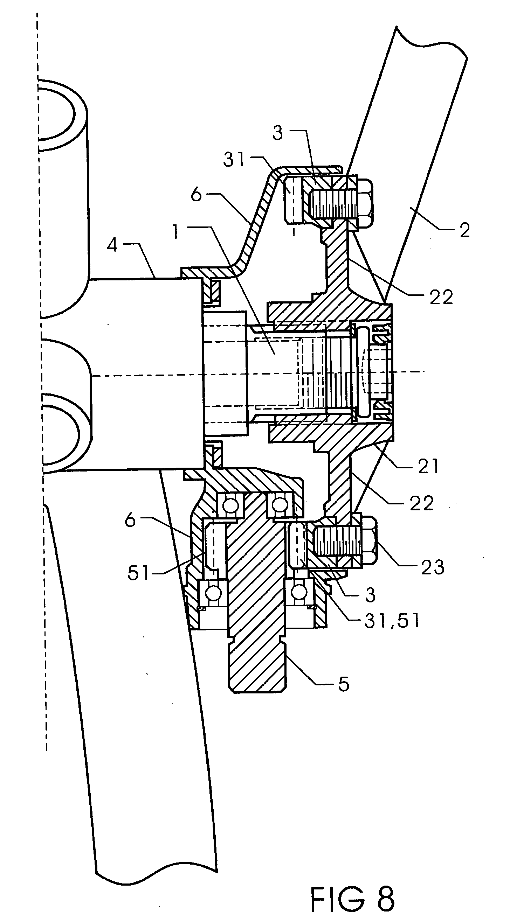

Fig. 8 is a cross-section view showing another sheath not claimed.

### DETAILED DESCRIPTION OF THE IVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

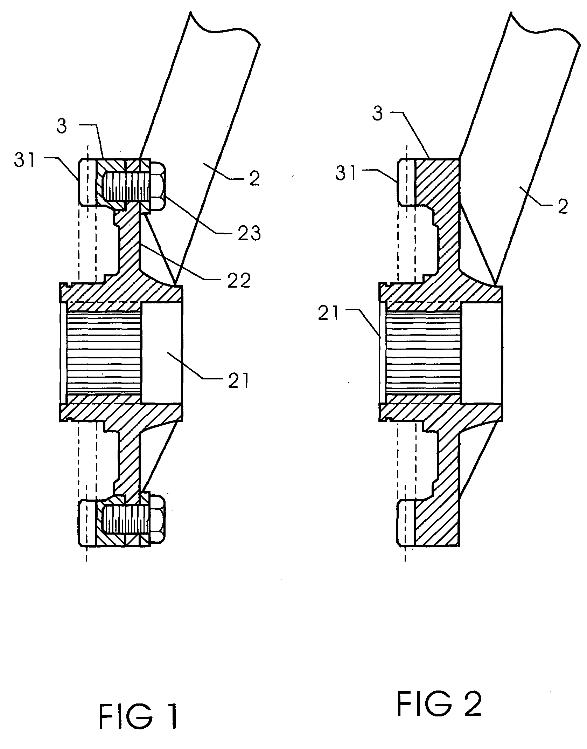

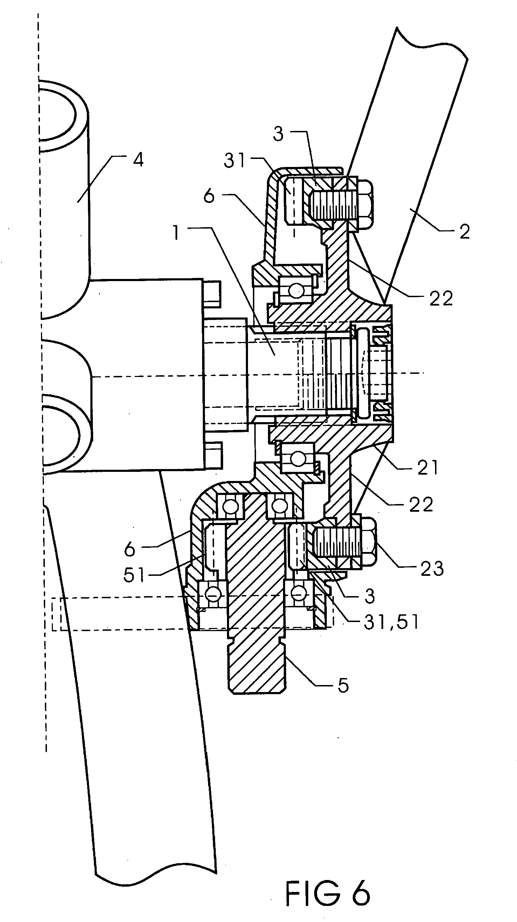

Referring to Figs. 1 and 2, preferable embodiments of the present invention mainly have at least one main transmission gear 3 on one of crank arms 2 (or an axis sleeve 21 of the crank arm 2) held in axis 1. The main transmission gear 3 is one of a face gear, bevel gear, screw gear, hypoid gear, or other type of gear. In the present embodiment, the main transmission gear 3 is a face gear to be engaged with a passive gear 51 of a passive shaft 5 under a sheath 6 as shown in Figs. 6. The teeth 31 of the main transmission gear 3 of the crank arm 2(or axis sleeve 21) face opposite to the crank arm 2.

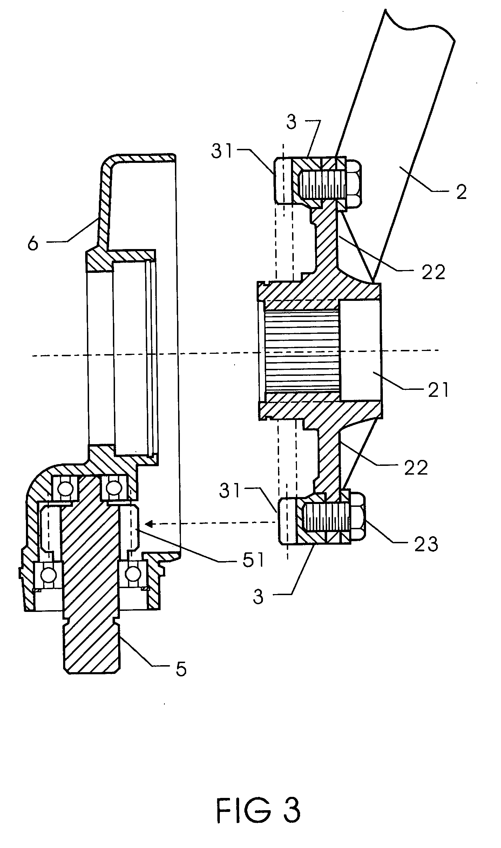

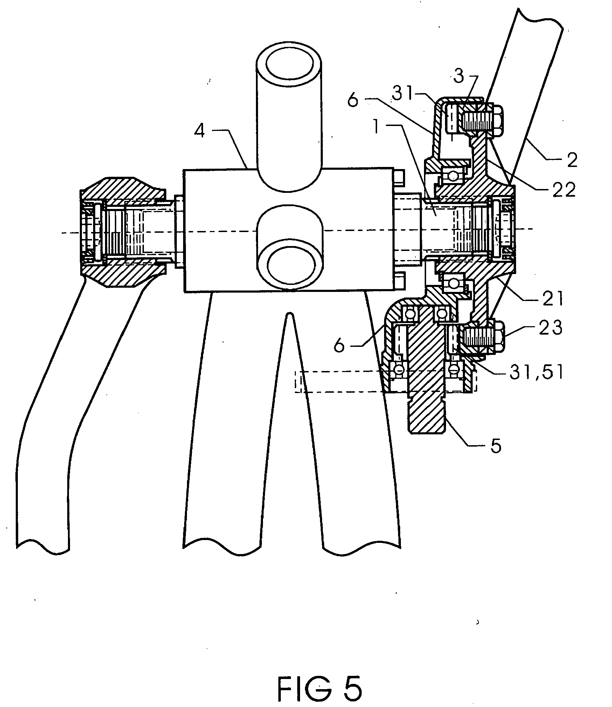

Referring to Fig. 1, the crank arm 2 has an axis sleeve 21 engaging the axis 1. The crank arm 2 has a joint 22 linking between the main transmission gear 3 and the axis sleeve 21, and the ring of the main transmission gear 3 is fixed to the joint 22 by fixing components 23. The teeth 31 of the main transmission gear 3 face opposite to the crank arm 2 so as to transmit cycle to the passive gear 51 of the passive shaft 5 engaged to the main transmission gear 3 under the sheath 6 as shown in Figs. 3, 5, and 6.

The sheath 6 covering the passive shaft 5 and passive gear 51 is arranged to the crank arm 2 through a central through hole thereof with a bearing arranged therebetween.

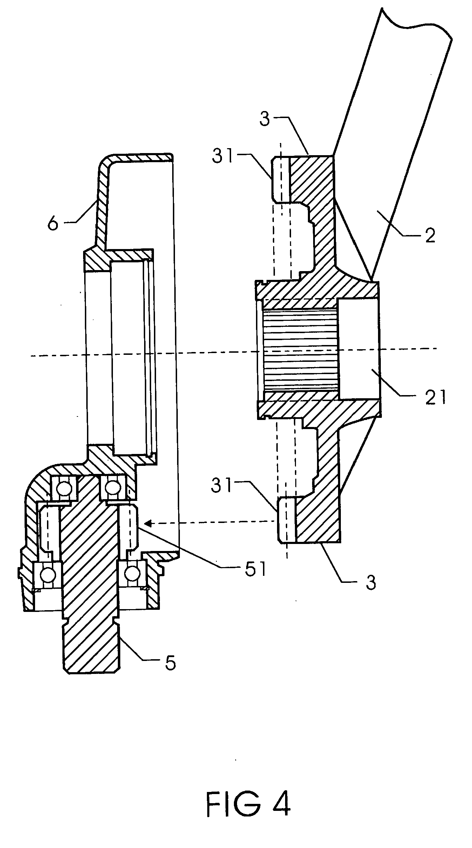

Referring to Fig. 2, another embodiment of the present invention has at least one ring of main transmission gear 3 integrated on the crank arm 2 or a axis sleeve 21 of the crank arm 2. Teeth 31 of the main transmission gear 3 face opposite to the crank arm 2 so as to transmit cycle to passive gear 51 of the passive shaft 5 engaged to the main transmission gear 3 under the sheath 6 as shown in Figs. 4.

Through the above components, the present invention has the following improvements.
1. The assembly of the main transmission gear of a shaft driven bicycle is improved to avoid a limitation of space or designed balance of the bicycle so as to increase practicality of the product.
2. To efficiently lower the manufacture and assembly cost of the main transmission gear so as to increase benefit of the product.
3. The main transmission gear of a shaft driven bicycle can be driven directly by the crank arms for better efficiency and the assembly won't interfere with the axis of the frame of the bicycle.

The present invention is thus described, it will be obvious that the same may be varied in many ways.

## Claims

1. A crank assembly of a shaft driven bicycle comprising:
a crank arm (2) arranged to an axis (1) of a bicycle frame (4) having at least one main transmission gear (3); and the at least one main transmission gear (3) having teeth (31) facing opposite to the crank arm (2);
a passive shaft (5) having a passive gear (51) engaged to the at least one main transmission gear (3) of the crank arm (2); the passive shaft (5) being covered by a sheath (6);
wherein the at least one main transmission gear (3) transmits a cycle of the crank arm (2) to the passive shaft (5); and
wherein the passive shaft (5) is arranged to the sheath (6), and **characterized in that** the sheath (6) is arranged to the crank arm (2) with bearings.

2. The crank assembly of a shaft driven bicycle as claimed in claim 1, wherein the crank arm (2) has a joint (22), and the at least one main transmission gear (3) is fixed to a side of the joint (22) by a fixing component (23) so that the teeth (31) of the at least one main transmission gear (3) face opposite the crank arm (2); and
wherein the crank arm (2) has an axis sleeve (21) pivoted to the axis, and the joint (22) of the crank arm (2) is extended from the axis sleeve (21).

3. The crank assembly of a shaft driven bicycle as claimed in claim 1, wherein the at least one main transmission gear (3) is integrated with the crank arm (2), and the teeth (31) of the at least one main transmission gear (3) face opposite to the crank arm (2); and
wherein the crank arm (2) has an axis sleeve (21), and the at least one main transmission gear (3) is integrated to the axis sleeve (21) of the crank arm (2).

## Patentansprüche

1. Kurbelanordnung eines Fahrrads mit Kardanantrieb, umfassend:
einen an einer Achse (1) eines Fahrradrahmens (4) angeordneten Kurbelarm (2), der mindestens ein Hauptgetrieberad (3) aufweist; und wobei das mindestens eine Hauptgetrieberad (3) Zähne (31) aufweist, die dem Kurbelarm (2) entgegengesetzt weisen;
eine passive Welle (5) mit einem passiven Zahnrad (51), das mit dem mindestens einen Hauptgetrieberad (3) des Kurbelarms (2) verzahnt ist; wobei die passive Welle (5) von einer Hülle (6) bedeckt ist;
wobei das mindestens eine Hauptgetrieberad (3) eine Umdrehung des Kurbelarms (2) auf die passive Welle (5) überträgt; und
wobei die passive Welle (5) an der Hülle (6) angeordnet ist, und **dadurch gekennzeichnet, dass** die Hülle (6) mit Lagern an dem Kurbelarm (2) angeordnet ist.

2. Kurbelanordnung eines Fahrrads mit Kardanantrieb nach Anspruch 1, wobei der Kurbelarm (2) eine Verbindungsstelle (22) aufweist, und das mindestens eine Hauptgetrieberad (3) durch eine Befestigungskomponente (23) an einer Seite der Verbindungsstelle (22) befestigt ist, sodass die Zähne (31) des mindestens einen Hauptgetrieberads (3) dem Kurbelarm (2) entgegengesetzt weisen; und
wobei der Kurbelarm (2) eine Achshülse (21) aufweist, die drehbar mit der Achse verbunden ist, und sich die Verbindungsstelle (22) des Kurbelarms (2) von der Achshülse (21) erstreckt.

3. Kurbelanordnung eines Fahrrads mit Kardanantrieb nach Anspruch 1, wobei das mindestens eine Hauptgetrieberad (3) mit dem Kurbelarm (2) integriert ist und die Zähne (31) des mindestens einen Hauptgetrieberads (3) dem Kurbelarm (2) entgegengesetzt weisen; und
wobei der Kurbelarm (2) eine Achshülse (21) aufweist, und das mindestens eine Hauptgetrieberad (3) in die Achshülse (21) des Kurbelarms (2) integriert ist.

## Revendications

1. Ensemble formant manivelle d'une bicyclette entraînée par arbre comportant :
un bras de manivelle (2) agencé sur un axe (1) d'un cadre de bicyclette (4) ayant au moins un engrenage de transmission principale (3) ; et ledit au moins un engrenage de transmission principale (3) ayant des dents (31) orientées à l'opposé du bras de manivelle (2) ;
un arbre passif (5) ayant un engrenage passif (51) mis en prise avec ledit au moins un engrenage de transmission principale (3) du bras de manivelle (2) ; l'arbre passif (5) étant couvert d'une gaine (6) ;
dans lequel ledit au moins un engrenage de transmission principale (3) transmet un cycle du bras de manivelle (2) à l'arbre passif (5) ; et
dans lequel l'arbre passif (5) est agencé sur la gaine (6), et **caractérisé en ce que** la gaine (6) est agencée sur le bras de manivelle (2) au moyen de roulements.

2. Ensemble formant manivelle d'une bicyclette entraînée par arbre selon la revendication 1, dans lequel le bras de manivelle (2) a un joint (22), et ledit au moins un engrenage de transmission principale (3) est fixé sur un côté du joint (22) par une pièce de fixation (23) de telle sorte que les dents (31) dudit au moins un engrenage de transmission principale (3) sont orientées à l'opposé du bras de manivelle (2) ; et
dans lequel le bras de manivelle (2) a un manchon d'axe (21) pivoté par rapport à l'axe, et le joint (22) du bras de manivelle (2) s'étend depuis le manchon d'axe (21).

3. Ensemble formant manivelle d'une bicyclette entraînée par arbre selon la revendication 1, dans lequel ledit au moins un engrenage de transmission principale (3) est intégré avec le bras de manivelle (2), et les dents (31) dudit au moins un engrenage de transmission principale (3) sont orientées à l'opposé du bras de manivelle (2) ; et
dans lequel le bras de manivelle (2) a un manchon d'axe (21), et ledit au moins un engrenage de transmission principale (3) est intégré avec le manchon d'axe (21) du bras de manivelle (2).
